# FASCICULE DE BREVET EUROPEEN

(11) **EP 4 017 673 B1**
(45) Date de publication et mention de la délivrance du brevet: **25.09.2024**
(21) Numéro de dépôt: 20775370.8
(22) Date de dépôt: 17.08.2020
(51) Int. Cl.: B23K 26/00, B23K 26/14, B23K 26/34, B23K 26/70

(54) **SYSTÈME DE DÉPÔT LASER DE MÉTAL**
LASER-METALLABSCHEIDUNGSSYSTEM
LASER METAL DEPOSITION SYSTEM

(30) Priorité: 22.08.2019 FR 1909356
(43) Date de publication de la demande: 29.06.2022
(73) Titulaire: SAFRAN AIRCRAFT ENGINES, 75015 Paris (FR)
(72) Inventeur: POUZET, Sébastien, Yohann, 77550 Moissy-Cramayel (FR); SEINCE, Hervé, Antoine, Frédéric, 77550 Moissy-Cramayel (FR); GRALL, Terence, 77550 Moissy-Cramayel (FR); MAUVOISIN, Ronan, 35580 Lassy (FR)
(74) Mandataire: Gevers & Orès
(86) Numéro de dépôt international: PCT/FR2020/051474
(87) Numéro de publication internationale: WO 2021/032926

(56) Documents cités:
- CN-U- 202 367 348
- GB-A- 2 558 897
- JP-A- 2005 169 396
- US-A- 4 560 858
- US-A1- 2016 346 875

## Description

### Domaine technique de l'invention

L'invention est relative au domaine de la fabrication additive de pièces métalliques notamment pour des aéronefs. En particulier, l'invention se rapporte à un système de dépôt laser de métal conformément au préambule de la revendication 1 (voir par exemple US2016/346875 A1).

L'invention concerne également un procédé de fabrication additive mettant en oeuvre ce système de dépôt laser de métal, voir la revendication 8.

### Arrière-plan technique

L'état de la technique comprend notamment les documents GB-A-2 558 897, JP-A-2005 169396, US-A-4 560 858 et CN-U-202 367 348.

Le dépôt direct de métal, également appelé DMD (pour « *Direct Metal Deposition* » en langue anglaise), est une technique de fabrication additive qui permet de réaliser des pièces complexes en déposant et en empilant des couches successives d'un matériau déterminé. Parmi les nombreuses variantes de cette technique figure la technique dite de dépôt laser de métal ou encore LMD (pour « *Laser Metal Deposition* » en langue anglaise). Pour réaliser un dépôt, cette technique implique d'alimenter régulièrement un bain liquide de métal en fusion, situé à la surface d'un substrat, sur lequel a lieu le dépôt. En particulier, du métal est apporté jusqu'au bain liquide sous la forme, soit d'une poudre (on parle alors de LMD-poudre), soit d'un fil (ou parle alors de LMD-fil), avant d'être mis en fusion par un faisceau laser focalisé.

Dans la version LMD-fil, chaque système de dépôt laser métallique comprend un système dédié à l'apport de fil métallique qui entraîne le fil jusqu'à une buse d'amenée. Le rôle de cette buse d'amenée est ensuite de guider le fil jusqu'à la zone du dépôt (i.e. jusqu'au bain liquide) où le fil est mis en fusion grâce à une tête laser. En outre, le guidage du fil par la buse d'amenée s'effectue dans un conduit interne à ladite buse qui est à la fois suffisamment large pour permettre une bonne circulation du fil et suffisamment étroit pour guider le fil avec précision.

Or, en fonction de la pièce à fabriquer et de la quantité de matière à déposer, un dépôt peut être plus ou moins long. Ainsi, dans le cas d'un dépôt long, l'énergie apportée au fil pour sa fusion peut entraîner une montée en température importante susceptible d'impacter les composants du système de dépôt. En particulier, la température élevée du métal en fusion peut entraîner une déformation de la buse d'amenée du fil située à proximité. En effet, cette buse d'amenée (généralement en cuivre) tend à s'allonger sous l'effet de la chaleur. En outre, un tel allongement entraîne un rétrécissement du conduit dans lequel le fil est guidé qui peut entraver la bonne circulation du fil métallique voire la bloquer totalement. En résumé, l'échauffement de la buse d'amenée qui se produit lors d'un dépôt long peut entraîner l'arrêt complet du processus de dépôt.

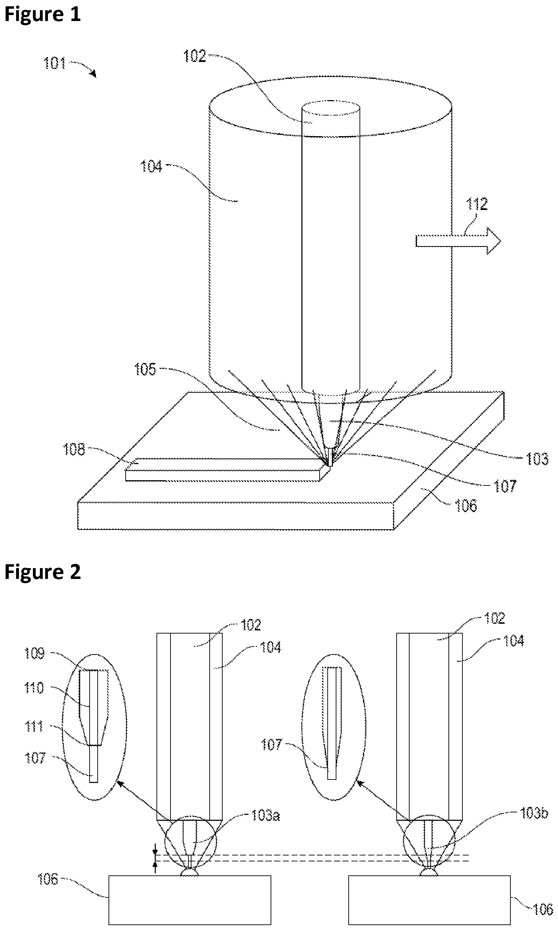

Un exemple de système de dépôt laser de métal par fil est décrit en référence aux figures 1 et 2.

Le système de dépôt laser de métal 101 comprend un système d'apport 102 adapté pour apporter du fil métallique jusqu'à une buse d'amenée 103. Plus précisément, le fil métallique 107 est apporté par le système d'apport jusqu'à un orifice d'entrée 109 de la buse d'amenée 103. Le fil métallique 107 circule ensuite dans un conduit interne à la buse 110, qui traverse la buse de part en part en reliant l'orifice d'entrée 109 situé à l'extrémité de la buse d'amenée en contact avec le système d'apport à l'orifice de sortie 111 situé à l'autre extrémité de la buse.

Lorsque le fil métallique 107 sort de la buse d'amenée 103 au niveau de l'orifice de sortie 111, il est mis en fusion par un faisceau laser focalisé 105 qui produit, à son point focal, une énergie suffisamment élevée pour faire fondre le métal. Dans l'exemple représenté, le faisceau laser 105 est généré par une tête laser 104 située sur le pourtour du système d'apport 102. En outre, le faisceau laser 105, émis par la tête laser 104, circule dans l'air, jusqu'à son point focal, tout autour de la buse d'amenée 103. Ainsi la buse d'amenée a une forme conique pour entraver le moins possible la circulation du faisceau laser. Finalement, le métal en fusion est déposé à la surface du substrat 106. Dans l'exemple représenté à la figure 1, le dépôt prend la forme d'un cordon 108 dont la forme découle du sens de déplacement du système de dépôt laser 101 symbolisé par la flèche 112.

Ainsi, à mesure que le système se déplace au-dessus du substrat, la métal en fusion déposé sur le substrat se solidifie à nouveau en refroidissant et forme le cordon 108.

La figure 2 illustre plus précisément l'effet de la déformation de la buse d'amenée 103 liée à son échauffement. En particulier, la partie gauche de la figure représente un système de dépôt laser de métal dans lequel la buse d'amenée 103a n'a subi aucune déformation alors que la partie droite de la figure représente un même système dans lequel la buse d'amenée 103b s'est allongée, par exemple, sous l'effet de la température. Comme il a déjà été dit plus haut, dans le cas de la buse d'amenée déformée 103b, le conduit interne 110 s'est rétréci du fait de l'allongement de la buse entraînant ainsi un blocage du fil métallique dans la buse. Classiquement, le conduit de la buse et le fil métallique ont une section circulaire et le diamètre du conduit est légèrement supérieur (de l'ordre de 10-15% à froid) à celui du fil. Ainsi, lorsque la buse s'échauffe, ce diamètre se réduit et peut empêcher la circulation du fil métallique dans la buse.

Une solution à ce problème peut consister à faire circuler un gaz refroidi directement au contact de la buse d'amenée pour éviter son échauffement et donc sa déformation. Typiquement, un dispositif adapté pour générer un jet d'argon est approché au plus près de la buse d'amenée pour pouvoir la refroidir le plus efficacement possible au cours de son utilisation. Toutefois, une telle solution entraîne l'ajout de nouveaux composants au système de dépôt et nécessite l'utilisation de ressources supplémentaires, dans des proportions plus ou moins importantes, en fonction de la durée du dépôt.

### Résumé de l'invention

La présente invention propose de permettre un refroidissement passif efficace de la buse d'amenée d'un système de dépôt laser de métal impliquant des modifications simples et peu coûteuses du système de dépôt laser de métal. En outre, l'invention a ainsi pour objectif d'éviter une déformation significative de la buse d'amenée sous l'effet de la chaleur de manière à permettre une utilisation ininterrompue de la buse, y compris pour des dépôts longs.

À cet effet, selon un premier aspect, l'invention concerne un système de dépôt laser de métal tel que défini dans la revendication 1, comprenant un système d'apport adapté pour apporter un fil métallique jusqu'à un orifice d'entrée d'une buse d'amenée, une buse d'amenée comportant une paroi tubulaire définissant un conduit cylindrique traversant la buse d'amenée selon un axe longitudinal, entre, d'une part, un orifice d'entrée et, d'autre part, un orifice de sortie, et une tête laser adaptée pour générer la fusion du métal au niveau de l'orifice de sortie de la buse d'amenée, ladite paroi tubulaire de la buse d'amenée étant caractérisée en ce qu'elle comporte en outre une pluralité d'ailettes externes adaptées pour permettre une dissipation de chaleur par échange thermique avec l'environnement immédiat de la buse d'amenée, lesdites ailettes externes ayant une forme annulaire, une épaisseur, selon l'axe longitudinal, comprise entre 0,7 et 1,3 millimètres et/ou étant espacées, selon l'axe longitudinal, d'une distance comprise entre 0,7 et 1,3 millimètres.

Ainsi, cette solution permet d'atteindre l'objectif susmentionné. En particulier, le refroidissement de la buse d'amenée permet de conserver les caractéristiques géométriques de la buse d'amenée quelle que soit la durée d'un dépôt métallique.

Le système de dépôt laser selon l'invention peut comprendre une ou plusieurs des caractéristiques suivantes, prises isolément les unes des autres ou en combinaison les unes avec les autres :
- le diamètre des ailettes externes annulaires décroit depuis l'orifice d'entrée de la buse d'amenée vers l'orifice de sortie de la buse d'amenée ;
- les périphéries externes des ailettes externes sont comprises dans une forme sensiblement conique adaptée pour permettre, la circulation d'un faisceau laser focalisé autour de la buse d'amenée ;
- les ailettes externes ont une section rectangulaire ;
- la buse d'amenée est en métal, de préférence en cuivre ;
- le nombre d'ailettes externes est inférieur ou égal à six, de préférence égal à six ;
- la paroi tubulaire de la buse d'amenée, dans une portion déterminée, située dans le prolongement de l'orifice de sortie, définit un conduit dont le diamètre est compris entre 1,05 et 1,25 millimètres, de préférence égal à 1,15 millimètres.

L'invention concerne également, selon un second aspect, un procédé de fabrication additive par dépôt laser de métal au moyen d'un système de dépôt laser de métal selon l'une quelconque des caractéristiques du premier aspect, voir la revendication 8.

### Brève description des figures

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
[Fig. 1] la figure 1 est une représentation schématique d'un système de dépôt laser de métal selon l'art antérieur ;
[Fig. 2] la figure 2 est une représentation schématique de l'effet d'un échauffement sur un système de dépôt laser de métal selon l'art antérieur ;
[Fig. 3a] la figure 3a est une représentation schématique d'un mode de réalisation d'une buse d'amenée d'un système de dépôt laser de métal selon l'invention ; et,
[Fig. 3b] la figure 3b est une photographie d'un mode de réalisation d'une buse d'amenée d'un système de dépôt laser de métal selon l'invention.

Les éléments ayant les mêmes fonctions dans les différents modes de réalisation ont les mêmes références dans les figures.

### Description détaillée de l'invention

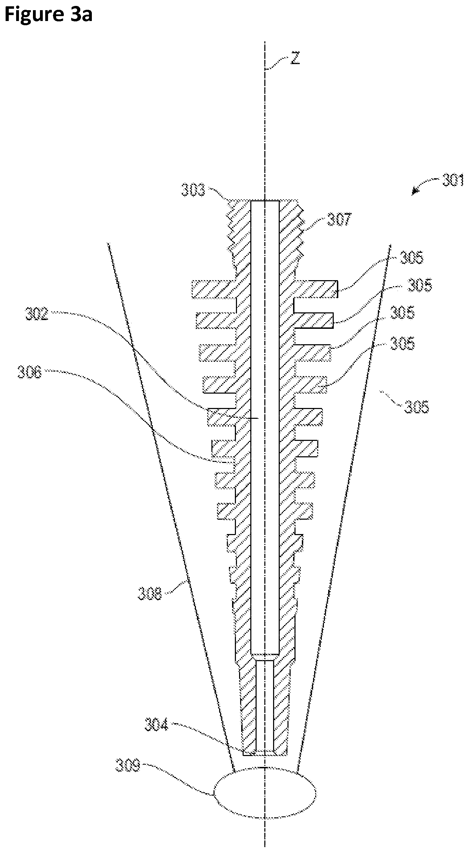

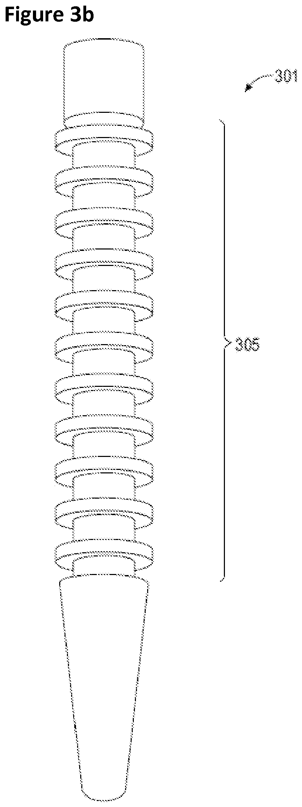

En référence à la figure 3a et à la figure 3b, nous allons maintenant décrire un mode de réalisation d'une buse d'amenée d'un système de dépôt laser de métal selon l'invention. L'homme du métier appréciera, qu'à l'exception de la buse d'amenée, tous les autres composants d'un tel système sont conformes à ceux d'un système de l'art antérieur tel que celui décrit en référence aux figures 1 et 2. En particulier, outre la buse d'amenée, le système de dépôt laser de métal auquel elle est intégrée comprend un système d'apport adapté pour apporter un fil métallique jusqu'à l'orifice d'entrée de la buse d'amenée et une tête laser adaptée pour générer la fusion du métal au niveau de l'orifice de sortie de la buse d'amenée.

Dans l'exemple représenté, la buse d'amenée 301 comporte une paroi tubulaire 306 qui définit un conduit cylindrique 302 qui traverse la buse selon l'axe longitudinal Z. Le conduit va de l'orifice d'entrée 303 jusqu'à l'orifice de sortie 304. Le rôle du conduit est de guider le fil métallique. Ainsi l'orifice d'entrée 303 est en contact avec le système d'apport qui fournit le fil métallique et, après avoir été guidé par la buse d'amenée 301, le fil métallique sort au niveau de l'orifice de sortie 304 pour aller alimenter le bain liquide 309. Le bain liquide 309 est donc alimenté par le métal (sous la forme de fil) mis en fusion par le faisceau laser focalisé 308.

En outre, dans un mode de réalisation particulier, la paroi tubulaire de la buse d'amenée, dans une portion déterminée, située dans le prolongement de l'orifice de sortie, définit un conduit dont le diamètre est compris entre 1,05 et 1,25 millimètres, de préférence égal à 1,15 millimètres. En effet, le fil métallique est typiquement cylindrique avec un diamètre égal à 1 millimètre. L'expérience a montré qu'un conduit d'un diamètre égal à 1,15 millimètres permet de guider le fil, en sortie de buse, avec la plus grande précision possible.

La buse d'amenée 301 comporte aussi des moyens de fixation amovible 307 comme, par exemple, un filetage externe permettant de visser la buse dans un taraudage complémentaire d'un composant du système de dépôt. Avantageusement, en cas de détérioration de la buse, celle-ci peut être remplacée sans impliquer le remplacement d'un autre composant du système de dépôt laser de métal.

Dans des modes de réalisations particuliers, la buse d'amenée est en métal, par exemple en cuivre. Avantageusement, ce matériau offre des propriétés de résistance et de conductivité thermique optimales pour une telle utilisation. Ainsi, une partie de la chaleur éventuellement accumulée par la buse d'amenée peut se dissiper par échange thermique de la buse avec son environnement immédiat, c'est-à-dire avec l'air qui l'entoure.

Pour augmenter l'efficacité de ces échanges thermiques, la paroi tubulaire de la buse d'amenée 301 comporte en outre des ailettes externes 305 qui sont adaptées pour permettre une dissipation de chaleur par échange thermique avec l'environnement immédiat de ladite buse. L'expression « environnement immédiat » désigne le milieu en contact direct avec la surface externe de la buse tel que, par exemple, de l'air, un gaz ou un liquide projeté sur ladite buse. En effet, de manière connue en soi, l'efficacité des échanges thermiques est liée à la surface du matériau en contact direct avec l'environnement en question. Autrement dit, la présence d'ailettes externes sur la paroi de la buse augmente la surface de la buse en contact avec son environnement et, par conséquent, sa capacité à dissiper la chaleur.

Conformément à l'invention, les ailettes externes ont une forme annulaire. En outre, le diamètre de ces ailettes externes annulaires peut décroître depuis l'orifice d'entrée de la buse d'amenée vers l'orifice de sortie de la buse d'amenée. Enfin, les périphéries externes des ailettes externes peuvent être comprises dans une forme sensiblement conique adaptée pour permettre, la circulation d'un faisceau laser focalisé autour de la buse d'amenée. En effet, comme l'illustre la figure 3a, le faisceau laser focalisé 308 utilisé pour mettre en fusion le métal a lui-même une forme sensiblement conique allant du diamètre le plus grand au niveau de la tête laser (non-représentée) jusqu'au plus petit diamètre au point focal (dans le bain liquide 309). Par conséquent, cette forme de buse permet d'entraver le moins possible la circulation du laser autour de la buse.

En outre, la forme de la buse comme celle des ailettes externes peuvent découler de la technique de fabrication utilisée pour obtenir les ailettes externes. En effet, avantageusement, une telle buse d'amenée peut être obtenue par usinage d'une buse d'amenée selon l'art antérieur. Ainsi, une buse d'amenée selon l'art antérieur, originellement de forme conique, peut être usinée pour créer des ailettes externes sur la paroi tubulaire de la buse. Un telle technique de fabrication limite la complexité et le coût associés à la fabrication d'une telle buse d'amenée.

De plus, comme dans l'exemple représenté à la figure 3a, la section des ailettes externes annulaires peut être rectangulaire. Avantageusement, un telle géométrie de section limite la complexité du processus d'usinage de la buse.

Dans un autre mode de réalisation particulier, le nombre d'ailettes externes est inférieur ou égal à six, de préférence égal à six. Ce nombre d'ailettes externes permet à la fois d'optimiser l'efficacité de l'échangeur thermique et de limiter aussi la complexité de fabrication de la buse.

Par ailleurs, l'homme du métier saura déterminer une épaisseur minimum que la paroi tubulaire doit avoir pour que la buse d'amenée conserve une rigidité déterminée. Dit autrement, en fonction des dimensions de la buse d'amenée et des ailettes externes, la paroi tubulaire doit être suffisamment épaisse pour éviter toute déformation mécanique de la buse. Dans l'exemple représenté aux figures 3a et 3b, l'épaisseur minimum de la paroi est égale à 1 millimètre.

Conformément à l'invention, les ailettes externes ont une épaisseur, selon l'axe longitudinal Z, comprise entre 0,7 et 1,3 millimètres et/ou sont espacées, selon l'axe longitudinal Z, d'une distance comprise entre 0,7 et 1,3 millimètres. Cette distance résulte de compromis entre la robustesse de la buse, l'efficacité de l'échangeur thermique et la complexité de fabrication. En particulier, la capacité d'un fluide (liquide ou gaz) situé dans l'environnement immédiat de la buse à circuler plus ou moins bien entre les ailettes, impacte les performances de l'échangeur thermique qu'elles constituent.

Finalement, l'utilisation d'ailettes externes pour réaliser un échangeur thermique permet d'obtenir, grâce à des techniques de fabrication simples, un système de refroidissement passif efficace. En outre, avantageusement, une telle approche peut être combinée avec l'utilisation d'un gaz refroidi pour augmenter encore l'efficacité du refroidissement de la buse et ainsi garantir de pouvoir utiliser le système de dépôt laser de métal pour des dépôts longs sans risque d'interruption du dépôt.

## Revendications

1. Système de dépôt laser de métal comprenant un système d'apport (101) adapté pour apporter un fil métallique jusqu'à un orifice d'entrée d'une buse d'amenée,
la buse d'amenée (301) comportant une paroi tubulaire (306) définissant un conduit cylindrique (302) traversant la buse d'amenée selon un axe longitudinal (Z), entre, d'une part, un orifice d'entrée (303) et, d'autre part, un orifice de sortie (304), et une tête laser (104) adaptée pour générer la fusion du métal au niveau de l'orifice de sortie de la buse d'amenée,
ladite paroi tubulaire de la buse d'amenée comportant en outre une pluralité d'ailettes externes (305) adaptées pour permettre une dissipation de chaleur par échange thermique avec l'environnement immédiat de la buse d'amenée,
**caractérisé en ce que** :
lesdites ailettes externes ont une forme annulaire, ayant chacune une épaisseur, selon l'axe longitudinal (Z), comprise entre 0,7 et 1,3 millimètres et/ou étant espacées, selon l'axe longitudinal (Z), d'une distance comprise entre 0,7 et 1,3 millimètres.

2. Système de dépôt laser de métal selon la revendication 1, dans lequel le diamètre des ailettes externes annulaires (305) décroit depuis l'orifice d'entrée (303) de la buse d'amenée vers l'orifice de sortie (304) de la buse d'amenée (301).

3. Système de dépôt laser de métal selon l'une quelconque des revendications 1 ou 2, dans lequel les périphéries externes des ailettes externes annulaires (305) sont comprises dans une forme sensiblement conique adaptée pour permettre, la circulation d'un faisceau laser focalisé autour de la buse d'amenée (301).

4. Système de dépôt laser de métal selon la revendication 2, dans lequel les ailettes externes annulaires (305) ont une section rectangulaire.

5. Système de dépôt laser de métal selon l'une quelconque des revendications 1 à 4, dans lequel la buse d'amenée (301) est en métal, de préférence en cuivre.

6. Système de dépôt laser de métal selon l'une quelconque des revendications 1 à 5, dans lequel le nombre d'ailettes externes annulaires (305) est inférieur ou égal à six, de préférence égal à six.

7. Système de dépôt laser de métal selon l'une quelconque des revendications 1 à 6, dans lequel la paroi tubulaire (306) de la buse d'amenée (301), dans une portion déterminée, située dans le prolongement de l'orifice de sortie (304), définit un conduit cylindrique (302) dont le diamètre est compris entre 1,05 et 1,25 millimètres, de préférence égal à 1,15 millimètres.

8. Procédé de fabrication additive par dépôt laser de métal au moyen d'un système de dépôt laser de métal selon l'une quelconque des revendications 1 à 7.

## Patentansprüche

1. Laser-Metallabscheidungssystem, umfassend ein Zufuhrsystem (101), das dazu angepasst ist, einen Metalldraht bis zu einer Eingangsöffnung einer Einlassdüse zuzuführen, wobei die Einlassdüse (301) eine rohrförmige Wand (306) umfasst, die eine zylinderförmige Leitung (302) definiert, die die Einlassdüse entlang einer Längsachse (Z) zwischen einerseits einer Eingangsöffnung (303) und andererseits einer Ausgangsöffnung (304) durchquert, und einen Laserkopf (104), der dazu angepasst ist, das Schmelzen des Metalls an der Ausgangsöffnung der Einlassdüse zu erzeugen, wobei die rohrförmige Wand der Einlassdüse weiter eine Vielzahl von äußeren Flügeln (305) umfasst, die dazu angepasst sind, eine Wärmeabteilung durch Wärmeaustausch mit der unmittelbaren Umgebung der Einlassdüse zu ermöglichen,
**dadurch gekennzeichnet, dass**:
die äußeren Flügel eine ringförmige Form aufweisen, die entlang der Längsachse (Z) jeweils eine Dicke zwischen 0,7 und 1,3 Millimeter aufweist, und/oder entlang der Längsachse (Z) in einem Abstand zwischen 0,7 und 1,3 Millimeter beabstandet sind.

2. Laser-Metallabscheidungssystem nach Anspruch 1, wobei der Durchmesser der ringförmigen äußeren Flügel (305) ausgehend von der Eingangsöffnung (303) der Einlassdüse zur Ausgangsöffnung (304) der Einlassdüse (301) hin abnimmt.

3. Laser-Metallabscheidungssystem nach einem der Ansprüche 1 bis 2, wobei die Außenumfänge der ringförmigen äußeren Flügel (305) in einer im Wesentlichen konischen Form enthalten sind, die dazu angepasst ist, die Zirkulation eines um die Einlassdüse (301) herum fokussierten Laserstrahls zu ermöglichen.

4. Laser-Metallabscheidungssystem nach Anspruch 2, wobei die ringförmigen äußeren Flügel (305) einen rechteckigen Querschnitt aufweisen.

5. Laser-Metallabscheidungssystem nach einem der Ansprüche 1 bis 4, wobei die Einlassdüse (301) aus Metall, vorzugsweise aus Kupfer, ist.

6. Laser-Metallabscheidungssystem nach einem der Ansprüche 1 bis 5, wobei die Anzahl der ringförmigen äußeren Flügel (305) kleiner oder gleich sechs, vorzugsweise gleich sechs, ist.

7. Laser-Metallabscheidungssystem nach einem der Ansprüche 1 bis 6, wobei die rohrförmige Wand (306) der Einlassdüse (301) in einem bestimmten Abschnitt, der sich in der Verlängerung der Ausgangsöffnung (304) befindet, eine zylinderförmige Leitung (302) definiert, deren Durchmesser zwischen 1,05 und 1,25 Millimeter, vorzugsweise gleich 1,15 Millimeter, ist.

8. Verfahren zur additiven Fertigung durch Laser-Metallabscheidung mittels eines Laser-Metallabscheidungssystems nach einem der Ansprüche 1 bis 7.

## Claims

1. A laser metal deposition system comprising a delivery system (101) adapted to deliver a metal wire to an inlet orifice of a feed nozzle, the feed nozzle (301) comprising a tubular wall (306) defining a cylindrical duct (302) passing through the feed nozzle along a longitudinal axis (Z), between, on the one hand, an inlet orifice (303) and, on the other hand, an outlet orifice (304), and a laser head (104) adapted to generate the melting of the metal at the outlet orifice of the feed nozzle,
said tubular wall of the feed nozzle further comprising a plurality of external fins (305) adapted to allow heat dissipation by heat exchange with the immediate environment of the feed nozzle,
**characterised in that**
said external fins are annular in shape, each having a thickness, along the longitudinal axis (Z), of between 0.7 and 1.3 millimetres and/or being spaced apart, along the longitudinal axis (Z), by a distance of between 0.7 and 1.3 millimetres.

2. The laser metal deposition system of claim 1, wherein the diameter of the external annular fins (305) decreases from the inlet orifice (303) of the feed nozzle towards the outlet orifice (304) of the feed nozzle (301).

3. The laser metal deposition system according to any one of claims 1 or 2, wherein the external peripheries of the annular external fins (305) are comprised in a substantially conical shape adapted to allow the circulation of a focused laser beam around the feed nozzle (301).

4. The laser metal deposition system according to claim 2, wherein the external annular fins (305) are rectangular in cross-section.

5. The laser metal deposition system according to any one of claims 1 to 4, wherein the feed nozzle (301) is made of metal, preferably copper.

6. The laser metal deposition system according to any one of claims 1 to 5, wherein the number of annular external fins (305) is less than or equal to six, preferably equal to six.

7. The laser metal deposition system according to any one of claims 1 to 6, wherein the tubular wall (306) of the feed nozzle (301), in a given portion located in the extension of the outlet orifice (304), defines a cylindrical duct (302) whose diameter is between 1.05 and 1.25 millimetres, preferably equal to 1.15 millimetres.

8. A method for additive manufacturing by laser metal deposition by means of a laser metal deposition system according to any one of claims 1 to 7.
